# EUROPEAN PATENT APPLICATION

(11) **EP 3 182 613 A1**
(43) Date of publication of application: **21.06.2017**
(21) Application number: 15275268.9
(22) Date of filing: 18.12.2015
(51) Int. Cl.: H04B 7/185, G06F 9/455

(54) **COMMUNICATIONS LINK SIMULATION**

(71) Applicant: Airbus Defence and Space Limited, Stevenage Hertfordshire SG1 2AS (GB)
(72) Inventor: The designation of the inventor has not yet been filed
(74) Representative: Hewett, Jonathan Michael Richard

(57) **Abstract**

An apparatus and method for simulating the performance of a communications link is provided in which a specification of a communications link to be simulated is received from a user, one or more modules for modelling properties of the specified communication link are selected, properties of the communications link to be simulated are formatted to a common format for integration, and the performance of the communications link is simulated by applying one or more test scenarios to a communications link simulated with the integrated formatted properties. The simulation results are output to the user.

## Description

The present invention relates to simulation of communications links and particularly, but not exclusively, to a facility for the optimisation of space turnkey communication systems.

Satellite communications systems have typically been split into five broad areas supported by satellites with different characteristics:
- Fixed services, including Fixed Satellite Services (FSS) such as Very Small Aperture Terminal (VSAT) systems provided to enterprise customers;
- Broadcast Satellite Service (BSS) such as TV provided to homes;
- Broadband services to residential customers;
- Geostationary Mobile Satellite Services (GMSS);
- Low Earth Orbit (LEO) and Medium Earth Orbit (MEO) Mobile Satellite Services; and
- Military and Government systems.

There has been an increasing amount of overlap between these services, and it is believed that this trend will continue in the future. The consequence of this is that there is an increasing need for multi-service satellite system capabilities. As an example, High Throughput Satellite (HTS) systems have seen trends towards optimized high capacity broadband systems, to handle services such as provision of video and other sensor data in real-time for Earth Observation.

Historically, the high costs of designing and implementing satellite systems have meant that they have been conceived of in isolation from each other and largely dedicated to a single application or mission, the mission being one of the following major categories:
- Earth Observation (covering civil and military applications);
- Science (e.g. the Rosetta mission to a comet);
- Exploration (e.g. the Curiosity mission to Mars);
- Navigation and providing global positioning satellites used for satnav applications (also known as global navigation satellite systems (GNSS));
- Telecommunications covering satellite systems for Broadcast Satellite Service (BSS), Fixed Satellite Service (FSS), Mobile Satellite Service (MSS) or Military applications.

For the various categories of application area described above, the overall infrastructure requires a combination of ground as well as space-based technological components, referred to herein as "assets". For example, ground infrastructure includes a number of ground stations to control and operate the satellites, user terminals (e.g. satellite TV antenna and set top box), and associated operational software tools to support interconnectivity between all space and ground assets.

These infrastructure assets have evolved independently. For example, the main satellite performance parameters for most fixed services systems have remained largely unchanged for the last 15 years or more. In contrast, mobile satellite systems have seen significant evolution in satellite capabilities.

Consequently, whereas in the past it has been possible to develop communications networks on an ad-hoc basis, based on establishment of point-to-point links, the trends in demands on satellite communications are driving for the adoption of radically different approaches to system design and optimisation. Communications systems now require integration of more diverse hardware and software, implementing a wider range of services, and thus complicating the overall design and optimisation stages. Typically, testing and simulation of systems requires bespoke testing systems and scenarios, designed for a particular communications system.

Embodiments of the present invention aim to provide a simulation facility for new communications links which enables optimisation of systems using those communications links. An advantage of the embodiments of the present invention is that any end-to-end space communications system, or any combined space and terrestrial communications system can be simulated efficiently by uniquely combining existing cutting-edge assets available from within the space industry. The simulation can thus be performed for all known and emerging space-enabled market sectors, and can be adapted for as yet undefined future space applications. Having performed simulation of a new link, implementation of that link can be set up on demand, using optimised parameters which are based on the simulation results. The facility provided by the embodiments of the present invention can be used during the implementation and operating phases of such space communications projects, either to verify predictions against actual measurements, or as a diagnostic tool in case of any anomalies.

According to aspect of the present invention, there is provided an apparatus for simulating the performance of a communications link comprising a first system for interfacing with a user to receive a specification of a communications link to be simulated from the user, and for selecting one or more modules for modelling properties of the specified communication link, a second system arranged to interface with the first system and configured to format properties of the communications link to be simulated, which are specified by the user, to a common format for integration, and a third system arranged to interface with the second system, and for simulating the performance of the communications link by applying one or more test scenarios to a communications link simulated with the integrated formatted properties, and for outputting the simulation results to the user.

The first system may comprise the one or more modules for modelling properties of the specified communication link.

The one or more modules in the first system may be implemented in hardware and/or software and are interchangeable.

The selection performed by the first system may be of one or more modules representing independent off-the-shelf assets.

The third system may be arranged to output simulation results comprising an indication of whether the simulated communication link is viable, and to output link quality parameters for the simulated communications link.

The simulation results may be provided to a user via a user interface, and the user interface may also be arranged to receive the specification of the communication link to be simulated from the user, wherein the user interface may contain a number of input elements for varying the properties of the communications link to be established, and a component for updating, substantially in real-time, the simulation results as the input elements are varied.

The first system may be arranged to receive a specification of a space-based and/or terrestrial communications link and to select one or more modules modelling properties of a space-based and/or terrestrial communications link.

The first system may be arranged to receive a specification of a communications link which represents a plurality of links between multiple end users of a communications system, and the apparatus may be arranged to simulate the performance of the plurality of links.

The third system may be arranged to simulate communications performance and/or network management tasking.

The second system may be arranged to format the properties of the specified communications link by converting properties to a common domain and normalising parameters associated with the properties of the specified communications link in the common domain.

The one or more test scenarios may be stored in a module in the third system, and the first system may be arranged to receive a user specification of the one or more test scenarios to be applied to the simulated communication link.

The one or more modules of the first system may store data modelling one or more of: end user terminal types, channel matrices, multipath interference effects, handovers between ground stations and/or satellites and/or user terminals, inter-satellite links, application types to be communicated in the simulation, radio-link budgets, spectrum availability, communication protocols, encryption requirements, and air interfaces, wherein the one or more modules may be selected for modelling properties of the communications link by extracting properties from the specified communications link and selecting the one or more modules which contain data modelling the extracted properties.

The third system may be arranged to receive a user instruction to establish the simulated communications link and to interface with external systems and to use information in the one or modules of the first and second systems to transmit an instruction to external software and/or hardware to establish the requested communications link.

According to a further aspect of the present invention, there is provided a method of simulating the performance of a communications link comprising receiving a specification of a communications link to be simulated from a user, selecting one or more modules for modelling properties of the specified communications link, formatting properties of the specified communications link to be simulated to a common format for integration, integrating the formatted properties to model the specific communications link, applying one or more test scenarios to the modelled communications link to simulate the performance of the communications link, and outputting the simulation results to the user.

The method may be implemented as a computer program.

Embodiments of the present invention will now be described by way of example only, with reference to the accompanying drawings, of which:
Figure 1 is a schematic of an apparatus for simulating the performance of a communications link according to an embodiment of the present invention;
Figure 2 illustrates a query processing module according to an embodiment of the present invention;
Figure 3 illustrates a model formatting module according to an embodiment of the present invention;
Figure 4 illustrates s simulation module according to an embodiment of the present invention;
Figure 5 illustrates a user interface used in an embodiment of the present invention; and
Figure 6 illustrates a simulation method performed according to an embodiment of the present invention.

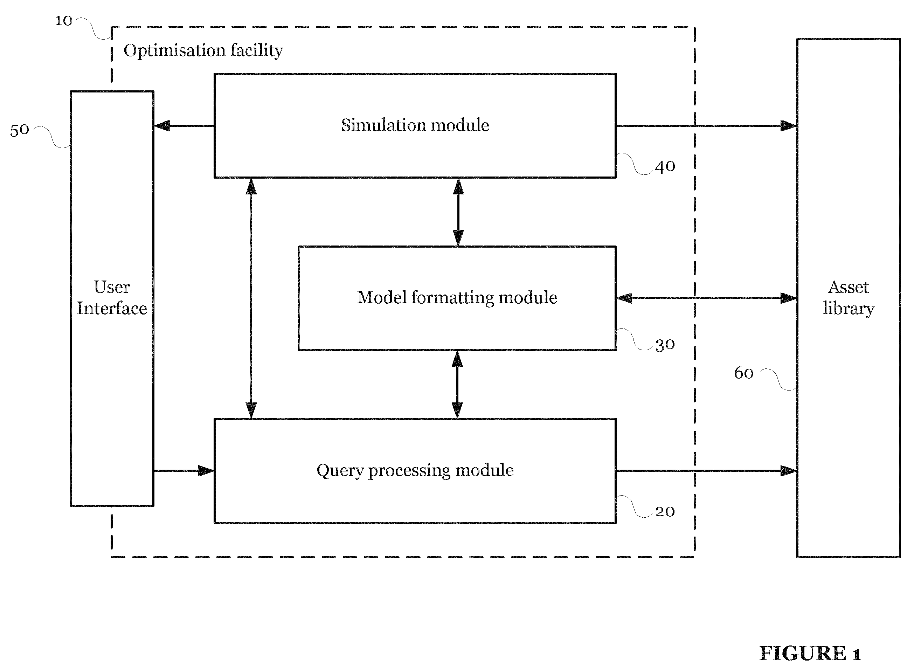

Figure 1 is a schematic of an apparatus for simulating the performance of a communications link according to an embodiment of the present invention. The apparatus will be referred to herein as an optimisation facility 10.

The optimisation facility 10 operates to receive a specification of a communications link to be simulated from a user, and performs simulation of that link. The results of the simulation are output to the user via a user interface 50 which enables a user to take further steps such as establishing the link, or performing further simulation of a modified version of the originally specified communications link.

The communications link may represent an individual end-to-end link, and/or multiple links between multiple users of a communications system, and the optimisation facility 10 may be understood as representing a space turnkey communications optimisation facility, since it can enable simulation and optimisation of a completed space-based or combined space and terrestrial-based service or system.

The optimisation facility 10 comprises three systems. The first system is referred to as a query processing module 20 or unit and interfaces with the user to receive a specification of one or more communications links to be simulated, and for selecting one or more modules for modelling properties of the specified communications link.

The second system is referred to as a model formatting module 30 or unit and interfaces with the query processing module 20 and is responsible for ensuring that the output from selected modules which model properties of the specified communications link can be combined into an overall simulation. Since the properties to be modelled are represented by different parameters, as explained in more detail below, processing is performed to enable each model to be integrated into an overall representation of the communications link.

The third system is referred to as a simulation module 40 or unit and interfaces with the model formatting module 30 and is responsible for performing the simulation of the link by applying one or more test scenarios to the link as modelled by the model formatting module 30. The simulation results are output to a user via a user interface. In the present embodiment, the first and third systems 20, 40 are illustrated as interfacing with the same user interface 50, but in a modification of this embodiment, the two user interfaces may be different, running on different hardware and/or implemented using different software.

In general terms, examples of the types of simulation to be performed are end-to-end radio frequency performance analysis, and assessment of link quality for a number of applications and modulation formats. The user is able to determine from such simulations how a link is likely to perform in a number of different scenarios and is therefore able to determine whether that link is viable. The simulation results may provide many output parameters of a communications link, or a communications system configured to include such a link, including the needed availability, security, quality of service (QoS) and quality of experience (QoE) supporting communications applications needed by individuals and professional organisations.

The optimisation facility 10 of Figure 1 may be implemented in hardware, software, or a combination of both. In the case where the optimisation facility 10 is implemented in software, the software may be downloaded from a server or supplied on a non-transient computer-readable medium and installed on a computer. In one embodiment, the software may be installed on a server, and a user may communicate with the server via a client terminal such as a personal computer, tablet or other device. In another embodiment, the software may be installed locally on a computer operated by the user.

The three systems 20, 30, 40 described above may be integrated into the same hardware and/or software implementation or may be distributed components running on a network, in which communication between the different systems is performed using a protocol known in the art.

### Assets for link modelling

The modelling modules operate to define the configuration of a particular communications link relating to a specific user-defined or customer-defined communications requirement. As an example, the input to the query processing module 20 may be provided as a request to model the viability of a communications link having a particular bandwidth, accessing a particular geographical location, available at a particular point in time, and using a particular modulation format. If a configuration of a link having these parameters is modelled and simulated to demonstrate acceptable performance in response to the application of a number of different test scenarios, the user can either set up such a link independently at a convenient time in the future, or can do so via a user interface associated with the optimisation facility 10 of the present embodiment.

In the present embodiment, the modelling modules are external to the optimisation facility 10, and represent a collection, suite or confederation of commercially available or bespoke individual assets available from, for example, industry or academia. Many of these assets may be used independently for particular space applications. The assets represent "off-the-shelf" or proprietary hardware and/or software tool sets, for modelling various aspects of a particular communications link, and examples of such aspects are described in more detail below. The accessibility of hardware and/or software tools is such that the optimisation facility 10 of the present invention is able to perform a full hardware simulation, a full software simulation, or any combination of hardware and software.

The suite of assets may be understood as contained in a dynamic asset library 60, reflecting the interchangeability of assets over time, including the addition of new assets or the replacement or upgrading of old assets. In addition, or alternatively, the dynamic asset library 60 may reflect the desire of a user to access a particular group of assets at a particular time, for example those associated with a particular provider. Such a desire may be implemented via appropriate configuration of the query processing module 20.

Since modules within the asset library 60 may represent high-performance assets, validated as such through academic or commercial institutions, the selection and combination of these assets by the optimisation facility 10 of the present invention enables rigorous and accurate simulations to be performed.

In another embodiment, modelling modules which are accessed by the query processing module 20 are included in the optimisation facility 10 as a local library. This may be achieved, for example, through the download of commercially-available software representing one or more assets, and the storage of the software as a computer program in a memory in the query processing module, accessed and executed by a processor (not shown). As an alternative configuration, a microcontroller or application-specific integrated circuit (ASIC) may be installed in the query processing module to implement one or more assets.

The modelling modules which are available for selection by the query processing module 20 in an embodiment of the present invention represent the following eight functional areas of assets:
- Application layer and standards tool set;
- Network management tool set;
- Radio Frequency (RF) planning tool set;
- Ground and space segment equipment models;
- User terminal equipment models;
- Orbital handover tool set;
- Beam handover tool set; and
- Hardware model assets.

Within each functional area, there are multiple tools and/or models from which a selection can be made. A brief description of each functional area is set out below.

The application layer and standards tool set is concerned with the application type to be communicated in the simulation. Typically, this component of the link is voice, video, data, multimedia or other subset of these. Various tools exist which can mimic the subsets; e.g. the various Vocoder standards.

This functional area also houses the International Standards Organisation/Open Standards Interface (ISO/OSI) database, which can be used as a basis of modelling a particular communications link. This gives a particular interface for a particular application layer; either via the network layer or the physical layer. In combination, the communications link or "chain" introduces stochastic variables onto a waveform propagating across the link to be modelled, based upon the dynamics of the channel and the nature of the air-interface. Software is available which can model and/or simulate these variables. The functions which can be subject to modification include: modulation, phase coding, error control coding, interleaving, filtering and protocol enhancement.

The network management tool set provides an internet protocol (IP)-based network management capability with high levels of automation. It enables a network of communications links to be planned and configured. Contained within the tool set is a view of the characteristics of the ground terminal types. The network management tool set operates to take the specific customer-derived communications requirement to be simulated, as input to the query processing module 20, through to a network plan. It does this by establishing an optimum configuration (i.e. pathway) through the end-to-end system.

The RF Planning Toolset provides a view of the communications radio dimension by considering the multiple radio link budgets, spectrum availability, and satellite transponder pathways in order to supply the optimum carrier-frequency mapping for the specific customer-derived communications requirement, as input to the query processing module 20.

The ground and space segment equipment models are contained inside databases which hold the communications performance data of a large range of equipment from which a selection is made to perform an end-to-end simulation. For each item of equipment, the performance details and parameters may be in a format needed for the simulation to run, but as will be described in more detail below, the required formatting can be performed by the model formatting module. For each equipment, the performance parameters can be taken from the requirements specification, or in the form of predicted performances, or in the form of 'as measured' performances.

Equipment will be operational in either one or more RF domains, or in the digital domain for signal processors, or in the optical domain for optical links, or in the baseband domain, or a combination of domains depending upon the end-to-end communications chain being simulated. The space segment domain will include satellites from multiple orbits and associated inter satellite links where appropriate. Models for Unmanned Aerial Vehicles (UAV)s and Human Powered Aircrafts (HPA)s may also be included when used in a constellation in conjunction with satellites and the ground segment.

The user terminal equipment models are contained inside databases which hold the communications performance data of a large range of end user terminal types from which a selection is made to perform an end-to-end simulation.

The orbital handover tool set is dedicated to calculating and modelling the implementation of handovers between satellites, ground stations and user terminals for end to end communications links containing satellites in orbits other than the geostationary orbit and/or mobile ground terminals.

The beam handover tool set is dedicated to calculating and modelling the implementation of handovers between satellites, ground stations and end user terminal beams, for any of the assets employing multiple beam technologies.

The hardware model assets are a collection of real hardware from the space segment, ground segment and end user terminal segment. The hardware can be used instead of, or alongside, software models as desired. The hardware can be separate items or built up into a chain as appropriate.

Although eight functional areas are identified above, in alternative embodiments of the present invention, modules in more or fewer than eight functional areas may be available for selection.

### Asset selection

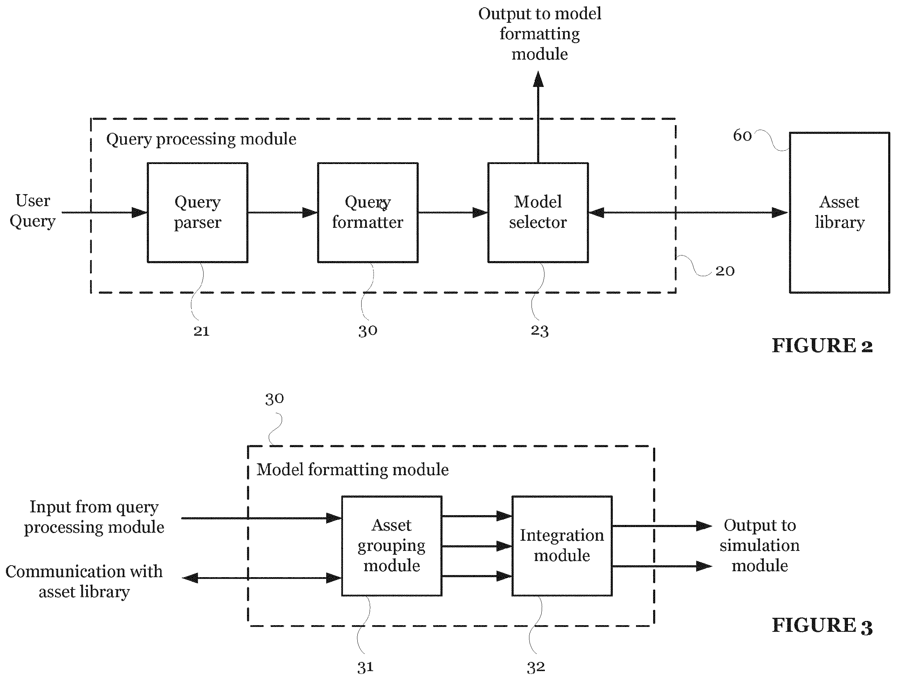

Figure 2 illustrates an example of the query processing module 20 according to an embodiment of the present invention.

As described above, the query processing module 20 operates to receive a specification of a communications link to be simulated. The system may achieve this through receiving a user input via a user interface 50, running on a computer. The computer hosting the user interface 50 may be the same computer on which the entire optimisation facility 10 is installed. In this embodiment, the first, second and third systems represent software modules which are executed by a computer processor.

The user interface 50 may receive a text string specifying a communications link to be simulated, which is parsed by a query parser 21. The query parser 21 is configured to search for predetermined terms and to extract values associated with these terms to pass to a query formatter 22. As an example, predetermined terms may be frequency units such as "kHz", "MHz", and numbers immediately preceding such terms can be extracted by the query parser 21 for identification by the query formatter 22 as carrier frequencies or bandwidths, expressed in kilohertz, megahertz or the like. As a further example, a predetermined term may be "dB", and numbers preceding this term may be identified as a power requirement, expressed in decibels. Boolean operators such as "AND" and "OR" and relational terms such as "at" and "over" may also be identified and extracted in order to determine whether aspects of a user query are to be combined, expressed as alternatives, or whether the terms are to express exact requirements, approximate requirements, or maximum or minimum limits. The query parser 21 may also be configured to extract other predetermined telecommunications keywords such as "optical", "modulation", "QAM", "broadband", "coverage", "air interface", and "satellite", among others.

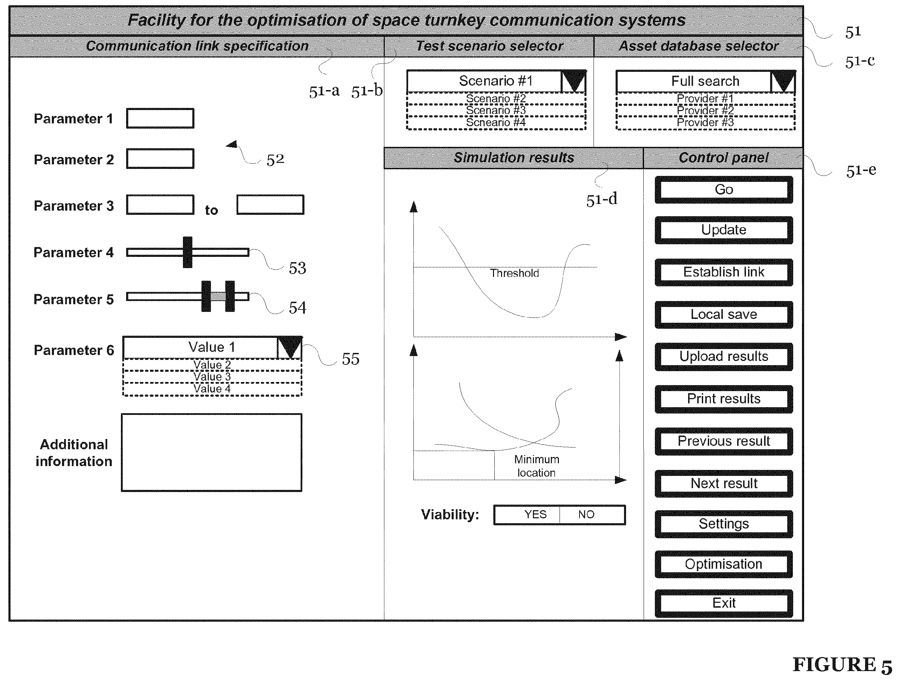

In alternative embodiments, and as illustrated in more detail with respect to Figure 5, the user interface 50 is configured to display a predetermined group of input fields 52 which are to be populated by the user. The fields may represent, for example modulation format, bandwidth, signal to noise ratio, carrier frequency, and may be freely entered as text in the interface fields 52, or selected from a pre-determined drop-down list 55. Parameter values can also be adjusted via one or more slider tools 53, up/down interface controls or the like, or using range markers 54 where ranges of operating parameters are to be specified.

Such a configuration simplifies the operation of the query parser 21 which can pass information to the query formatter 22 which has already been grouped by the predetermined fields in the user interface 50.

The query parser 21 operates to pass extracted information to the query formatter 22, which interprets and processes the received data to generate a query in a format which can be passed to a model selector 23. The purpose of the model selector 23 is to identify those modules which model the specified aspects of the communications link, and in order to perform this function, the model selector 23 searches for the existence or availability of modules which operate in a combination reflected by the output from the query parser 21.

The query formatter 22 operates to assist this operation of the model selector 23 by presenting the model selector 23 with information in a form which can be compared directly with the functionality of a module.

As an example, the query formatter 22 may receive the information "optical fibre link" from the query parser 21. The query formatter 22 determines that this represents a specification of a physical characteristic of the link to be modelled, and provides such an indication to the model selector 23.

In this example, the model selector 23 determines which modules can be accessed to model physical characteristics of the communications link, which may involve a module which can be categorised as an application layer and standards tool set, as described above, and a module which can be categorised as modelling ground and space segment equipment.

The model selector 23 searches for assets in these two areas in the asset library 60. The search may be performed in an analogous manner to an internet search, searching a network for the location of appropriate software or hardware tools which are registered at particular network addresses. In alternative embodiments, the searching may be guided by a user input provided through the link specification interface, which limits the search to a particular group of assets, such as those provided by a particular institution or organisation.

In embodiments where a more restricted asset search is to be performed, a predetermined group of assets may advertise their availability to the optimisation facility 10 in advance, so that the model selector 23 can determine whether such assets can be accessed on the basis of locally stored information reflecting asset availability. Such information may be stored in a memory in the query processing module 20 (not shown). The stored advertised availability information may include a brief description of the capability of each asset, keywords from which can be matched with information provided to the model selector 23 by the query formatter 22 to identify the correct asset or assets.

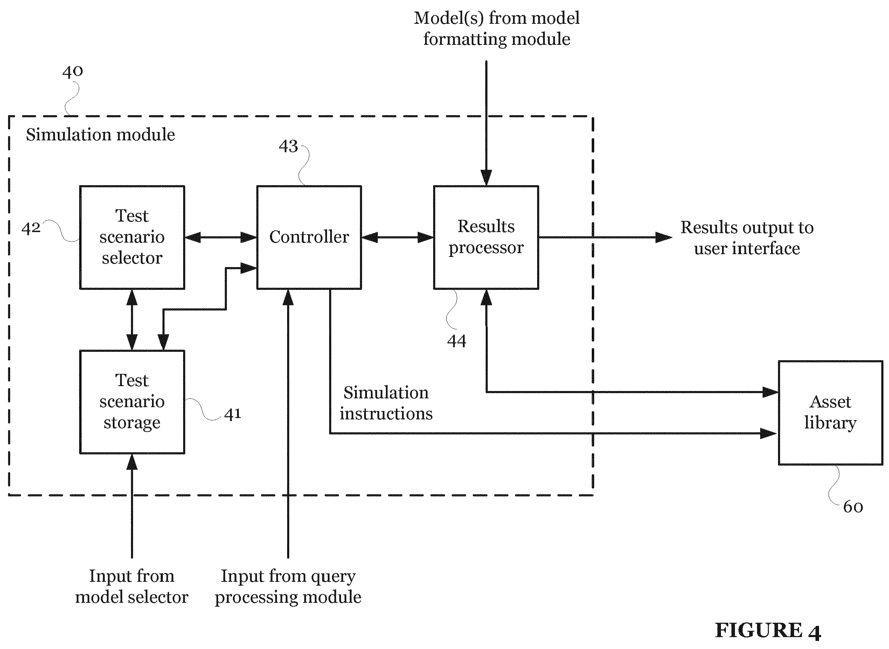

Information from the selected assets is then passed to the model formatting module 30 for formatting to enable simulation of the communications link, described in more detail below. Information from the model selector 23 is also passed to the test scenario storage module 41, to be described in more detail with reference to Figure 4, to enable configuration of the tests which are to be performed on the communications link during the simulation.

In some embodiments, it is possible for the user to request simulation of the performance of a standalone communications link, but in other embodiments, a user may request whether a user-to-user link can be set up when many or all of the constituent ground-based fixed and mobile terminals, and space-based elements of an existing turnkey system, are already in use.

In this instance, the query parser 21 receives a full definition of the turnkey system in terms of the number and type of assets, such as ground stations, user terminals and satellites, and the resources and environmental aspects that the various aspects of the system can utilise. Limitations, in terms of frequency allocation, capacity, bandwidth, coverage and other considerations may be input via the user interface 50 to the query parser 21, and through appropriate operation of the model selector 23, the asset library 60 is able to model the link. This configuration can be understood as involving the creation of a simulation of a "loaded" turnkey environment model.

### Formatting

Figure 3 illustrates the structure of the model formatting module 30 according to an embodiment of the present invention.

The aim of the model formatting module 30 is to combine or integrate the various models and simulation tool sets represented by the selected assets into a form which represents a simulation of the communications link specified by the user. The formatting may be carried out in a number of different ways, dependent on the particular group of assets which are selected.

An example in which two different assets may separately model different aspects or properties of the performance of an inter-satellite link ISL is described as follows. A first asset is selected to model the performance of the link as a function of the orbital positions of the two satellites around the Earth. A second asset is selected to model the performance of the inter-satellite link as a function of the signal power level, determined, for example, as the operating points of amplifiers used in signal transmitters and receivers in the ISL. In this example, it is assumed that the intended simulation of the ISL is to measure the signal to noise ratio (SNR) of a communication transmitted at a particular frequency using a particular modulation scheme, which is fixed. Information modelling ideal transmission using a carrier frequency and modulation scheme may be obtained from the RF planning tool set asset.

The SNR may be represented as parameter *Y.* The first asset outputs a first function, *f₁*, to the model formatting module 30 such that a first SNR *y*₁, is defined as *y*₁ *= f₁*(*x₁*) where parameter *x₁* represents orbital position (measured as a vector defining a position in a polar co-ordinate system relative to the centre of the Earth), for signals transmitted at the defined frequency and the defined modulation scheme obtained from the RF asset, and at a particular signal power level. The second asset outputs a second function, *f₂*, to the model formatting module 30 such that a second SNR *y*₂*,* is defined by *y*₂ = *f₂*(*x₂*), where parameter *x*₂ represents the power level of a signal transmitted at the defined frequency and with the defined modulation scheme obtained from the RF asset, and at a particular orbital position.

An integration module 32 in the model formatting module 30 combines these two functions to derive a multi-variable function, *F*, which represents SNR, *Y*, for the link as *Y* = *F*(*x*₁, *x₂*). The combination of the two functions set out above is performed by building up a map of different functions *y*₁ = *f₁*(*x₁*) obtained from the first asset for a range of different power levels, and different functions *y₂ = f*₂(*x₂*) obtained from the second asset for a range of different orbital positions. If functions *f*₁ and *f*₂ are considered as two-dimensional functions in an x-y plane, function F can be considered as a function representing a surface in a three-dimensional space in a co-ordinate system defined by *x₁*, *x₂* and *Y.* The model *Y* = *F*(*x*₁, *x₂*) is provided to the simulation module 40 to enable the communications link as a whole to be modelled.

The surface thus enables the effects of both orbital position and power level on SNR to be determined simultaneously in visual form. It will be understood that the mathematical tools can be applied to determine maxima or minima or saddle points of such a function, for the purposes of optimisation, while for the example described above, simulation may also involve comparison of the value *Y* with a threshold SNR for a range of operating parameters, so that an indication of viability can be output.

The example above represents the integration of two models representing the effect of different variables on the same parameter, but it will be appreciated that the same principle can be applied to the integration of further models to yield a multi-variable function of three or more variables, which can be transferred to the simulation module 40 to model the communications link.

As described in the example above, some assets provide an indication of the effect of a particular variable on a parameter in terms of a function, so that the effect of a range of different values for the variable can be simulated. In other situations, an asset may be required only to output a fixed quantity, such as a scaling factor to be applied to other models in the integration process. It will be appreciated that in the example described above, such a scaling factor may be associated with a modulation format, so that SNR may be determined as varying with orbital position of a satellite, but the absolute value of the SNR might, for example, be doubled at each orbital position if the modulation format is changed.

In other embodiments, it may be the case that only a single-variable function is output to the simulation module 40, all other properties of the communications link being fixed and specifically defined in the user's query. In this situation, the formatting may involve applying the fixed values to models represented by each relevant asset selected by the model selector 23 to output, for example, a scaling factor associated with each of the fixed value parameters.

As part of the creation of the multi-variable function, normalisation may be required where assets output functions expressed in different scales or units. For example, one asset modelling signal levels may provide an output measured in decibels (dB), whereas another asset also modelling signal levels may provide an output measured in decibel-milliwatts (dBm). In this situation, appropriate conversion of the units is performed by the model formatting module so that a multi-variable function can be obtained.

Viability of a communications link may be assessed by the simulation module 40 in a number of different ways. The example of SNR is provided above, and the user may have a particular threshold below which a SNR is deemed to render the communication link unfit for purpose. An alternative measurement might be a particular Bit Error Rate (BER), below which a communications link is deemed to be viable. Further examples are a signal power level, or peak-to-peak amplitude which is required to enable a receiver in a communications link to extract information from a signal, and many other additional or alternative measures will be apparent. In each case, the one or more measures which are required will be determined by the query parser 21 and the model selector 23 will select an asset which models those one or more measures. The model formatting module 30 will then provide a respective model expressing the value of each of those measures as a function of one or more variables.

Where two or more such measures of link viability are required, for example signal power level and BER, it may not be possible for the model formatting module 30 to construct a single model which illustrates the variance of each of the measures at the same time, due to the dimensional incompatibility of these measures. In such a situation, the model formatting module 30 may output a plurality of different models to the simulation module 40, one for each of the measures of link viability, each model being an integrated model as described above. The simulation module 40 may then assess each measure in turn, or simultaneously, representing results side by side or on two different interface screens, and an overall measure of viability can be determined by performing a logical AND operation on the individual measures of viability.

In the embodiment shown in Figure 3, the model formatting module 30 comprises a grouping module 31, which groups the assets identified by the model selector 23, based on the measure of link viability which is modelled by the assets. In an example, a group of assets might contain two assets which both model BER, one based on transmission frequency and one based on transmitter hardware. A third asset which models SNR would be assigned to a different group of assets because it does not provide a measure of BER. The integration module 32 performs integration of the assets within each group to output a plurality of models to the simulation module 40, one model for each asset group. The grouping module 31 receives an input from the query processing module 20, specifying the assets to be selected, and also interfaces with the asset library 60 to locate and retrieve the assets selected by the query processing module 20.

### Link simulation

Once all the necessary assets have been selected by the query processing module 20, and formatted by the model formatting module 30, the simulation module 40 is arranged to use the model or models provided by the model formatting module 30 either individually or collectively to perform an end-to-end performance simulation of the entire communications link selected, and predict a number of communication parameter performances. The prediction process can simulate a range of multipath, interference effects and other mechanisms which will impact the performance of the specified communications link.

The simulation is performed by the simulation module 40 interfacing with the various functional areas contained within the tool sets and models selected by the query processing module 20 to control the corresponding assets in the asset library 60 in order to perform the simulation of the link. The results provided by the selected tool sets and models are combined according to the model or models constructed by the model formatting module 30 so that the results are arranged in a form which can be output to the user.

The simulation module 40 contains a number of test scenarios which are applied to the modelled link, such as scenarios representing use at particular frequencies, particular times of days, the impact of the number of users sharing a link, modelling of noise and interference patterns, use of different modulation schemes, response times and transitions between operating modes, and so on. The test scenarios may be defined in advance, but may be configured by a user via the user interface 50 through, for example, uploading externally-prepared testing scenarios to the simulation module.

The simulation is thus capable of testing one or more of the following, although it will be appreciated that this is not an exhaustive list:
- Command-orientated visual planning and coordination of operational deployments using map-based graphical workbench displays;
- Situational awareness controlling who is accessing and using networks;
- Provision and protection of satellite RF spectrum capacity, mapping services to bandwidth;
- Access control and security management which can include providing cyber-security and QoS data;
- An interoperable platform simulator to manage integrated service capability with current and future networks;
- "Building block" inter-satellite link (ISL) capabilities based on laser and/ or microwave technologies, supporting communications between satellites in diverse orbits (LEO, MEO, GEO and other orbits);
- "Building block" sensors for flexible deployment as hosted payloads or dedicated missions; both in space and on airborne vehicles;
- Adaptive receivers with cognitive and software-definable air interface support;
- Advanced active antennas capable of providing adaptive coverage depending on satellite location, traffic demand and spectrum environment;
- Advanced network management systems to optimise resource orchestration, involving:
   ∘ inter-satellite coordination and allocation of radio resources between satellites within the dynamic constellation;
   ∘ satellite-ground co-ordination e.g. dynamic allocation of radio resources for hotspots; and
- Mitigation of both intra-constellation and external interference within ITU spectrum allocations and regulations.

A simulation module 40 according to an embodiment of the present invention is shown in Figure 4. The simulation module 40 comprises memory 41 for storing test scenarios, and a test scenario selector 42 which interfaces with the user interface 50 to determine which of the stored test scenarios should be used in the simulation. The simulation module 40 also comprises a controller 43 for providing information associated with the selected test scenario or scenarios to the assets for simulation, and for controlling the test scenario selector 42 and the test scenario storage 41.

The information which is provided by the controller 43 defines the simulation to be performed. In one embodiment, the controller 43 may provide ranges of values of parameters to be used in the simulation. The assets then perform simulation of their respective component of the communications link over each respective parameter range which is specified by the controller 43. Each simulation is integrated by the model formatting module 30 in the manner described above with reference to Figure 4, and the simulation results are communicated to a results processor 44 in the simulation module. The results processor 44 operates to convert the results into a format which can be output to a user, for example in the form of one or more graphs or tables to be displayed on the user interface 50 or a report to be printed or transmitted to an e-mail address or cloud storage location. The results processor 44 can exchange data with the asset library 60. As set out below, the user may request an update of results when a particular parameter is accessed, and rather than the controller 43 initiating a new simulation instruction to the asset library 60, the results processor 44 may instead request the asset library 60 to return the effect of an update parameter value on the simulation results.

The specific manner in which the effect of each parameter is modelled is thus determined by the corresponding assets which are selected, and thus the simulation may be performed in a number of different ways, due to the wide range and high standard of available assets. The model selector 23 is thus able to control the stored test scenarios, for example through causing new test scenarios associated with previously unselected assets, to be stored for selection by the test scenario selector 42. To optimise storage requirements, for example, unrequired test scenarios which are not associated with the selected assets may be deleted from the test scenario. The optimisation facility 10 of the present invention combines the simulations in a unique manner to provide an overall simulation result to a user representing the specified communications link.

### Simulation Results

In an embodiment of the present invention, the results of the simulation are presented to user via a user interface 50. The user interface 50 may be hosted by a computer on which software representing the optimisation facility 10 is installed, but in an alternative embodiment, the results of the simulation are output by the simulation module 40 to a separate processing unit which generates and outputs its own user interface. For example, the optimisation facility 10 may be implemented in software modules hosted on a server, and the server may output simulation results to a user terminal from which they can be accessed by a user.

The simulation results may be presented in a variety of formats appropriate to a user. In a basic implementation, the simulation results may represent a binary indication of whether a specified communications link is viable. In more complex implementations, the simulation results may represent a plot of performance against a varying parameter. One example might be a signal power level plotted against carrier frequency. Another example might be SNR plotted against time of day. A number of different result formats may be available for selection by a user through the interface, so that the user can cycle through different representations of the performance of a communications link to analyse different aspects, or observe such results simultaneously using a plurality of display windows or overlaid graphs or charts.

In some embodiments, rather than outputting simulation results in real time as the simulation is performed, through a user interface such as a computer display, the simulation results may be output in a format which can be observed offline at a later time, such as a document or report which can be downloaded and printed or viewed on a display. The simulation results may be hosted on a server for access for a predetermined period of time, wherein the user can log into an account with which the simulation results are associated. Such association can be performed as part of a process of installing software representing the optimisation facility 10 on a computer terminal, for example, where a user account can be created and various settings and user preferences can be configured. An example of such a preference would be a preferred set of assets to be made available for selection, since it may be the case that competing organisations have different versions of the same asset, and a particular version might be preferred by the user.

In embodiments in which the specification of the communications link is performed via the same user interface 50 as that through which the simulation results are output, the user can conveniently configure a modification or development of the original simulation so as to perform more detailed analysis of an aspect of the particular communications link. An example of such an interface 51 is shown in Figure 5. As described above, the user interface 51 of Figure 5 may be displayed on a client terminal in the event that the user accesses the optimisation facility 10 of an embodiment of the present invention which is hosted on a server. The client terminal may be a remote terminal such as a personal computer, or may be a mobile device running an interface application which is optimised for display on, for example, a mobile phone. Alternatively, the user interface 51 may be displayed on a user interface of a computer which is hosting the optimisation facility 10.

The interface of Figure 5 provides windows or areas for specifying a communication link 51-a, selecting test scenarios 51-b, selecting asset database 51-c, displaying simulation results 51-d, and a control panel 51-e for performing enabling various commands to be performed, including initiating a simulation, updating simulation results, establishing a communications link, saving simulation results either locally or on a server, printing the results, scrolling through simulation results, changing settings such as predetermined configurations, defaults or test profiles, optimisation, or exiting the simulation.

The optimisation facility 10, through commanding the corresponding optimisation control button from the control panel 51-e, leads the user to an interface which enables a process of automatic adjustment of one or more parameters of the link to enable a particular measurement to be optimised in the signal results. For example, various parameters may be scanned over their specified operating ranges in combination in order to determine an optimum SNR for a communications link, and the set of optimised parameters are output to the user via the user interface.

As described above, it is possible to adjust various input parameters using tools such as slider controls 53, and in one embodiment, the simulation results can be updated substantially in real time as one or more input parameters are adjusted, through appropriate control of a corresponding asset. Such an approach enables a user to quickly determine the effect of varying a parameter on the performance of the link, if such an effect is not already represented in the simulation results.

As an example, a set of simulation results might show a number of performance measurements for a communications link having a defined modulation format. The user might be able to determine which factors optimise the performance of that link, such as the time of day or the number of users, but if performance is deemed to be unsatisfactory for all combinations of variables, the user may also wish to observe the effect of adjusting the modulation format itself. This could be achieved through use of a drop-down menu 55, for example, switching the modulation format between different types, and activating an update control button from the control panel 51-e.

In the case where the user has requested simulation of a link within the context of a turnkey system, if the requested link is not determined to be viable, the optimisation facility 10, accessed through the optimisation control button in the control panel 51-e, may cause additional simulation iterations may be performed to enable alternate pathways to be found until a viable link can be either established, or confirmed as unviable. The model to be constructed from the asset library 60 via the model selector 23 takes into account all the other links through the system which are already in use. In each case, once it is established that a link is viable, the model can task the link performance simulation. The creation of a loaded turnkey environment model, as described above, followed by user-to-user viability checking, followed by link simulation, thus enables optimisation of the turnkey system architecture.

Having performed a simulation of a particular communications link, the user may wish to proceed to establish a communication link having the simulated characteristics. In some embodiments, the optimisation facility 10 achieves this on selection of an establishment command button, by issuing commands to relevant source and destination devices in a network, and may adopt the role of a network controller, mediating device discovery and link establishment protocols. For example, the optimisation facility 10 may operate as a DHCP (Dynamic Host Configuration Protocol) controller, assigning IP addresses to the source and destination devices, which are communicated to the user via the user interface, so that the user can make use of an IP-based connection.

The specification of a communications link to be simulated may represent a proposed communications link which has not yet been established. The simulation would thus represent part of a design procedure in which the viability of such a link is to be tested so that establishment of a communications system employing the link can be achieved in a resourceful and spectrum-efficient manner, with reliable performance of architectural trade-offs. This in turn enables business plans to be assessed with a good knowledge of the overall constellation architecture which is needed, the constituent elements required, and associated risks and constraints. As well as outputting an indication of viability, as set out above, the simulation results may output many output parameters of the turnkey space system including the needed availability, security, quality of service (QoS) and quality of experience (QoE) supporting communications applications needed by individuals and professional organisations.

The specification of a communications link to be simulated may also represent an already-established communications link, which might be in operation in, for example, a satellite communications system. For space-based applications, it is very beneficial to be able to monitor performance of communication links because this can serve as a diagnostic tool which enables errors to be corrected. Substantial errors may be difficult to correct where particular components have failed or are operating below an optimal level, and so a diagnostic tool can enable an early-warning system to be configured which can enable such failures to be predicted, and preventative measures to be taken.

As well as error prevention, embodiments of the present invention as applied to simulation and optimisation of existing communications links can enable the effects of upgrades or reconfigurations of the links to be predicted. As an example, a user may wish to know the effect of upgrading particular microwave filters in a communications link to a higher specification. The specification of the improved microwave filters would in this instance be modelled by the ground and space segment equipment tool set. The user's upgrade query would be passed from the user interface 50 to the query processing module 20, which would enable the model selector 23 to select this particular asset from the available asset library 60, and the model formatting module 30 would integrate data from this asset to enable simulation by the simulation module 40. The simulation results could be displayed as an overlay over the results for the current configuration of the communications link, so that the user is able to determine the effect of the filter replacement.

### Simulation Method

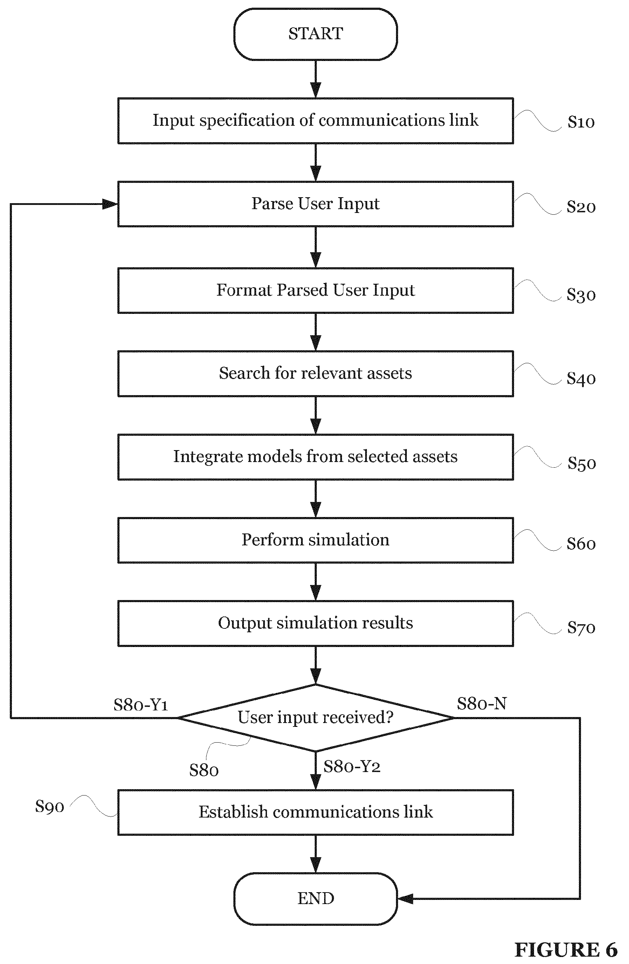

Figure 6 illustrates a simulation method of the present invention according to an embodiment of the present invention. The simulation is performed by the optimisation facility 10 of the embodiment of Figure 1.

At step S₁₀, a user inputs a specification of a communications link to be modelled via a user interface 50.

At step S20, the user input is parsed in order to identify a number of parameters of the communications link.

At step S30, the parsed user input is formatted so that further processing can be performed. The formatting translates the parsed user input into a form which can be directly compared with the capability of a plurality of assets which are available for selection by the optimisation facility 10.

As step S40, a search is performed for assets which can model the communications link as specified by the user. The search is performed of hardware and/or software assets from academia or industry, for example, in the manner described above in relation to Figure 2. Appropriate assets which are identified by the search are selected for participation in the modelling of the communications link.

At step S50, information from the selected assets is provided to a model formatting module 30 for integration to a complete model of the specified communications link. The integration is performed in the manner described above in relation to Figure 3.

As step S60, a simulation of the specified communications link is performed by applying one or more test scenarios to the modelled communications link.

At step S70, the results of the simulation are output to a user via a user interface 50.

At step S80, it is determined whether further user input is received. If there is no further user input (S80-N), the simulation is complete and the user is able to take further action offline, such as configuration of a communications link. In some embodiments, the method may end after a predetermined time has elapsed, but in alternative embodiments, the user may close the user interface and shut down the optimisation facility 10. If there is input, it is determined whether the input represents specification of a new or modified version of a communications link to be simulated. If the user input requests simulation of a new or modified communications link (S80-Y1), the process returns to step S20. If there is input, if is also determined whether the user input represents a request to establish of a communications link. If the user input does request establishment of a link (S80-Y2), the method proceeds to step S90.

At step 890, a communications link is established using the parameters modelled during the preceding steps.

It will be appreciated that modifications to the embodiments described above may be made which fall within the scope of the invention as defined by the claims, based on interchange of some or all of the described or illustrated elements. The nature of the subject matter of the invention, in terms of the configuration of an optimisation facility to operate with any number of assets to perform simulation of any communication link or system is such that the present invention can be configured in a number of different ways based on the type of simulation to be performed.

Where certain elements of the present invention can be partially or fully implemented using known components, only those portions of such known components that are necessary for an understanding of the present invention are described, and detailed descriptions of other portions of such known components are omitted so as not to obscure the invention. In the present invention, an embodiment showing a singular component should not preclude other embodiments including a plurality of the same component, and vice-versa, unless explicitly stated otherwise herein. Further, the present invention encompasses present and future known equivalents to the known components referred to herein by way of illustration.

The foregoing description is provided to enable any person skilled in the relevant art to practice the various embodiments described herein. Various modifications to these embodiments will be readily apparent to those skilled in the relevant art, and generic principles defined herein can be applied to other embodiments. Thus, the claims are not intended to be limited to the embodiments shown and described herein, but are to be accorded the full scope consistent with the language of the claims. All structural and functional equivalents to the elements of the various embodiments described throughout this disclosure that are known or later come to be known to those of ordinary skill in the relevant art are intended to be encompassed by the claims.

## Claims

1. An apparatus for simulating the performance of a communications link, comprising:
a first system for interfacing with a user to receive a specification of a communications link to be simulated from the user, and for selecting one or more modules for modelling properties of the specified communication link;
a second system arranged to interface with the first system and configured to format properties of the communications link to be simulated, which are specified by the user, to a common format for integration; and
a third system arranged to interface with the second system, and for simulating the performance of the communications link by applying one or more test scenarios to a communications link simulated with the integrated formatted properties, and for outputting the simulation results to the user.

2. An apparatus according to claim 1 wherein the first system comprises the one or more modules for modelling properties of the specified communication link.

3. An apparatus according to claim 2 wherein the one or more modules in the first system are implemented in hardware and/or software and are interchangeable.

4. An apparatus according to any one of the preceding claims wherein the selection performed by the first system is of one or more modules representing independent off-the-shelf assets.

5. An apparatus according to any one of the preceding claims, wherein the third system is arranged to output simulation results comprising an indication of whether the simulated communication link is viable, and to output link quality parameters for the simulated communications link.

6. An apparatus according to claim 5, wherein the simulation results are provided to a user via a user interface, and the user interface also arranged to receive the specification of the communication link to be simulated from the user,
wherein the user interface contains a number of input elements for varying the properties of the communications link to be established, and a component for updating, substantially in real-time, the simulation results as the input elements are varied.

7. An apparatus according to any one of the preceding claims wherein the first system is arranged to receive a specification of a space-based and/or terrestrial communications link and to select one or more modules modelling properties of a space-based and/or terrestrial communications link.

8. An apparatus according to any one of the preceding claims, wherein the first system is arranged to receive a specification of a communications link which represents a plurality of links between multiple end users of a communications system, and the apparatus is arranged to simulate the performance of the plurality of links.

9. An apparatus according to any one of the preceding claims, wherein the third system is arranged to simulate communications performance and/or network management tasking.

10. An apparatus according to any one of the preceding claims, wherein the second system is arranged to format the properties of the specified communications link by converting properties to a common domain and normalising parameters associated with the properties of the specified communications link in the common domain.

11. An apparatus according to any one of the preceding claims, wherein the one or more test scenarios are stored in a module in the third system, and the first system is arranged to receive a user specification of the one or more test scenarios to be applied to the simulated communication link.

12. An apparatus according to any one of the preceding claims, wherein the one or more modules of the first system store data modelling one or more of:
end user terminal types;
channel matrices;
multipath interference effects;
handovers between ground stations and/or satellites and/or user terminals;
inter-satellite links;
application types to be communicated in the simulation;
radio-link budgets;
spectrum availability;
communication protocols;
encryption requirements; and
air interfaces;
wherein the one or more modules are selected for modelling properties of the communications link by extracting properties from the specified communications link and selecting the one or more modules which contain data modelling the extracted properties.

13. An apparatus according to any one of the preceding claims, wherein the third system is arranged to receive a user instruction to establish the simulated communications link and to interface with external systems and to use information in the one or modules of the first and second systems to transmit an instruction to external software and/or hardware to establish the requested communications link.

14. A method of simulating a communications link, comprising:
receiving a specification of a communications link to be simulated from a user;
selecting one or more modules for modelling properties of the specified communications link;
formatting properties of the specified communications link to be simulated to a common format for integration;
integrating the formatted properties to model the specific communications link;
applying one or more test scenarios to the modelled communications link to simulate the performance of the communications link; and
outputting the simulation results to the user.

15. A computer program, which when executed by a processor, is arranged to perform the method of claim 14.
